# EUROPÄISCHE PATENTANMELDUNG

(11) **EP 2 811 117 A2**
(43) Veröffentlichungstag der Anmeldung: **10.12.2014**
(21) Anmeldenummer: 14171156.4
(22) Anmeldetag: 04.06.2014
(51) Int. Cl.: F01D 9/04, F01D 11/00

(54) **Deckbandanordnung für eine Strömungsmaschine**

(30) Priorität: 05.06.2013 DE 102013210427
(71) Anmelder: Rolls-Royce Deutschland Ltd & Co KG, 15827 Blankenfelde-Mahlow (DE)
(72) Erfinder: Gümmer, Volker, dr., 15831 Mahlow (DE)
(74) Vertreter: Müller, Wolfram Hubertus

(57) **Zusammenfassung**

Die Erfindung betrifft eine Deckbandanordnung für eine Strömungsmaschine, die aufweist: mindestens einen Schaufelfuß (310), der dazu ausgebildet ist, mit mindestens einem einer Reihe von Schaufeln (10, 20) eines Rotors oder eines Stators einer Strömungsmaschine verbunden zu werden, oder der mit mindestens einem solchen verbunden ist; und ein Deckband (340, 350, 360), dass an der den Schaufeln (10, 20) abgewandten Seite des Schaufelfußes (310) mit diesem verbunden ist. Es ist vorgesehen, dass der Schaufelfuß (310) an der den Schaufeln (10, 20) abgewandten Seite zwei sich im Wesentlichen in radialer Richtung erstreckende und zueinander axial beabstandete Schaufelfu ßfinger (312) aufweist, die zwischen sich eine in Umfangsrichtung durchgehende Ausnehmung (320) ausbilden, und mindestens ein Element oder Bereich (353) des Deckbandes (340, 350, 360) zur Befestigung am Schaufelfuß (310) in der Ausnehmung (320) angeordnet ist. Dazu ist weiter vorgesehen, dass das Deckband (350) zwei Stege (353) aufweist, die sich in die Ausnehmung (320) erstrecken und die von den Schaufelfußfingern (312) umfasst werden, wobei die zwei Stege (353) im Wesentlichen eine V-förmige Anordnung bilden.

## Beschreibung

Die Erfindung betrifft eine Deckbandanordnung für eine Strömungsmaschine gemäß dem Oberbegriff des Anspruchs 1.

Die aerodynamische Belastbarkeit und die Effizienz von Strömungsmaschinen, im Besonderen von Strömungsarbeitsmaschinen wie Bläsern, Verdichtern, Pumpen und Ventilatoren wird durch unter anderem durch Leckageströme an den Rändern des Hauptströmungspfades begrenzt. Dabei besteht eine Quelle solcher in Strömungsmaschinen entstehender Verluste in der Leckageströmung um Schaufeldeckbänder. Diese treten häufig am inneren Schaufelende von Statoren oder am äußeren Schaufelende von Rotoren auf.

Eine solche Leckageströmung wird üblicherweise durch Dichtspitzen, die innerhalb einer Kavität, in die das Deckband eingebettet ist, angeordnet sind, klein gehalten. Eine derartige Anordnung ist beispielsweise aus der DE 10 2010 055 435 A1 und der US 2003/0170115 A1 bekannt. Insbesondere in kleinen Strömungsmaschinen ist die bauliche Realisierung einer Deckbandanordnung auf axial engem Raum jedoch schwierig.

Aus der US 2007/0065286 A1 ist eine Deckbandanordnung bekannt, bei der am Schaufelfuß eine Ausnehmung ausgebildet ist, in der zwei Stege mit voneinander weg weisenden Vorsprüngen eines Deckbands angeordnet sind.

Der vorliegenden Erfindung liegt die Aufgabe zu Grunde, eine Deckbandanordnung für eine Schaufelreihe eines Rotors oder Stators einer Strömungsmaschine bereitzustellen, die auch auf axial engem Raum realisiert werden kann.

Diese Aufgabe wird erfindungsgemäß durch eine Deckbandanordnung mit den Merkmalen des Anspruchs 1 und eine Schaufelreihe mit den Merkmalen des Anspruchs 15 gelöst. Ausgestaltungen der Erfindung sind in den Unteransprüchen angegeben.

Danach geht die Erfindung von einer Deckbandanordnung für eine Strömungsmaschine aus, die mindestens einen Schaufelfuß und ein Deckband aufweist. Der Schaufelfuß ist dazu ausgebildet, mit mindestens einem Schaufelende einer Reihe von Schaufeln eines Rotors oder eines Stators einer Strömungsmaschine verbunden zu werden, oder ist mit mindestens einem solchen Schaufelende verbunden. Das Deckband ist an der den Schaufeln abgewandten Seite des Schaufelfußes mit diesem verbunden. Erfindungsgemäß ist vorgesehen, dass der Schaufelfuß an der den Schaufeln abgewandten Seite (d.h. an der vom Hauptströmungspfad der Strömungsmaschine weg weisenden Seite) zwei sich im Wesentlichen in radialer Richtung erstreckende und zueinander axial beabstandete Schaufelfußfinger aufweist. Die Schaufelfußfinger bilden zwischen sich eine in Umfangsrichtung durchgehende Ausnehmung aus. Dabei ist mindestens ein Element oder mindestens ein Bereich des Deckbandes zur Befestigung am Schaufelfuß in der Ausnehmung angeordnet. Hierbei handelt es sich erfindungsgemäß und zwei Stege, die sich in die Ausnehmung erstrecken und die von den Schaufelfußfingern umfasst werden, wobei die zwei Stege im Wesentlichen eine V-förmige Anordnung bilden. Die zwei Stege korrespondieren dabei mit entsprechenden Anlageflächen der Schaufelfußfinger und sind formschlüssig in der Ausnehmung gehalten. Die zwei Stege sind in axialer Richtung beabstandet.

Die erfindungsgemäße Lösung beruht somit auf dem Gedanken, in einem Schaufelfuß zwischen zwei axial beabstandeten Schaufelfußfingern eine Ausnehmung bereitzustellen, die der Aufnahme und Befestigung eines Deckbandes dient. Dabei kann die erfindungsgemäße Deckbandanordnung auch auf axial engem Raum realisiert werden, indem ein kleiner axialer Abstand der Schaufelfußfinger gewählt wird. Dies schränkt die Möglichkeiten der Befestigung eines Deckbandes nicht ein, da das mindestens eine Element oder der mindestens eine Bereich des Deckbandes, das/der in die zwischen den Schaufelfußfinger definierte Ausnehmung eingebracht wird, in seiner axialen Ausdehnung ebenfalls entsprechend klein ausgebildet werden kann.

Die erfindungsgemäße Lösung ist mit dem Vorteil verbunden, dass durch die zwei Stege und deren V-förmige Anordnung eine Elastizität bereitgestellt wird, die es ermöglicht, Fertigungstoleranzen auszugleichen, so dass das Deckband ohne Spiel in der Ausnehmung des Schaufelfußes angeordnet ist.

In einer Ausgestaltung der Erfindung ist vorgesehen, dass die durch die Schaufelfußfinger gebildete Ausnehmung eine konkave Form aufweist. Beispielsweise ist die Ausnehmung hierzu zumindest in einem Teilbereich schwalbenschwanzförmig ausgebildet, wobei sie sich in Richtung der Schaufeln verbreitert. Die zwei Stege sind formschlüssig in der Ausnehmung angeordnet, wobei jeweils ein Steg an einer korrespondierenden Anlagefläche eines Schaufelfußfingers anliegt. Insbesondere verlaufen die V-förmig angeordneten Stege jeweils parallel zu einer inneren Anlagefläche einer der Schaufelfußfinger.

Gemäß einer weiteren Ausgestaltung der Erfindung bildet jeder Schaufelfußfinger mindestens eine innere Anlagefläche aus, die der inneren Anlagefläche des jeweils anderen Schaufelfußfingers zumindest teilweise zugewandt ist. Dabei kann vorgesehen sein, dass mindestens eine der inneren Anlageflächen schräg zur Radialrichtung und zur Axialrichtung angeordnet und dabei den Schaufeln zugewandt ist. Die schrägen inneren Anlageflächen führen dazu, dass die durch die Schaufelfußfinger gebildete Ausnehmung sich zumindest abschnittsweise in radialer Richtung zu den Schaufeln hin im Hinblick auf ihre axiale Ausdehnung verbreitert, wodurch ein Element oder Bereich des Deckbandes sicher in der Ausnehmung gehalten werden kann. Weiter kann vorgesehen sein, dass wenigstens eine der beiden inneren Anlageflächen über einen Bereich ebenflächig ausgebildet ist.

Gemäß einer weiteren Ausgestaltung der Erfindung weist mindestens einer der Schaufelfußfinger Rastmittel zur Verrastung mit einem Element oder Bereich des Deckbandes auf. Eine solche Verrastung sichert die Verbindung zwischen Schaufelfuß und Deckband.

Es kann weiter vorgesehen sein, dass der Deckbandring im Bereich der Stege am Umfang mehrmals unterbrochen ist, so dass die Stege in verstärktem Maße elastisch ausgebildet sind. Beispielsweise stimmt die Anzahl der Unterbrechungen der beiden Stege am Umfang mit der Anzahl der Schaufeln überein oder bildet ein Vielfaches davon. Auch können die genannten Stege im Kontaktbereich mit dem Schaufelfuß eine Rastnase aufweisen, zwecks einer rastenden formschlüssigen Verbindung mit den Schaufelfußfingern im Bereich der Ausnehmung.

Die erfindungsgemäße Deckbandanordnung ist bevorzugt dazu vorgesehen, im Fall ihrer Verbindung mit einer Rotorschaufelreihe mit von einem radial außen angrenzenden Gehäuse ausgehenden Dichtspitzen und im Fall ihrer Verbindung mit einer Statorschaufelreihe mit Dichtspitzen einer radial innen liegenden Nabe oder Rotortrommel zusammenzuwirken.

In einer weiteren Ausgestaltung der Erfindung weist das Deckband einen Deckbandring auf, der in der Ausnehmung des Schaufelfußes angeordnet ist und der sich entlang wenigstens eines Teils des Umfangs der Schaufelreihe erstreckt. Der Deckbandring erstreckt sich somit beispielsweise entlang des gesamten Umfangs der Schaufelreihe oder entlang eines Teils des Umfangs der Schaufelreihe.

Gemäß einer Ausführungsvariante ist an der dem Schaufelfuß abgewandten Seite des Deckbandringes ein Einlaufbelag am Deckbandring angeordnet. Dieser besteht üblicherweise aus einem weicheren Material als der Deckbandring und dient dazu, dass Dichtspitzen eines angrenzenden Gehäuse oder einer angrenzenden Nabe sich in diesen einarbeiten können, um eine vorhandene Leckageströmung zu minimieren. Alternativ kann vorgesehen sein, dass die Funktion des Deckbandringes und die Funktion des Einlaufbelages durch ein Bauteil bereitgestellt wird, also Deckbandring und Einlaufbelag durch ein Bauteil realisiert werden.

Üblicherweise ist vorgesehen, dass in der Strömungsmaschine, in der die erfindungsgemäße Deckbandanordnung angeordnet ist, die den Schaufeln von Rotor oder Stator zugewandte Seite des Schaufelfußes den Hauptströmungspfad berandet. Dabei ist die den Schaufeln abgewandte Seite des Schaufelfußes in einer Kavität der angrenzenden strömungsbegrenzenden Struktur (Gehäuse oder Nabe/Rotortrommel) angeordnet. Grundsätzlich sind aber auch davon abweichende Ausgestaltungen möglich.

In einer Ausgestaltung der Erfindung weist wenigstens einer der Schaufelfußfinger an seinem Ende eine den Schaufeln abgewandte radiale Anlagefläche auf. An dieser liegt ebenfalls das Deckband oder, sofern eingesetzt, eine Verschleißschutzhülse an. Insbesondere kann vorgesehen sein, dass das Deckband in mindestens einem seiner axial vorderen und hinteren Randbereiche an einer radialen Anlagefläche eines Schaufelfußfingers anliegt.

In einer weiteren Ausgestaltung der Erfindung besitzt die Ausnehmung zwischen den Schaufelfußfingern eine symmetrische Form. Für diesen Fall sind auch die Schaufelfußfinger symmetrisch am Schaufelfuß angeordnet.

Es kann bei der erfindungsgemäßen Deckbandanordnung wenigstens eine Verschleißschutzhülse eingesetzt werden, die zwischen aneinander angrenzenden Flächen des Schaufelfußes und des Deckbandringes angeordnet ist. Eine solche Verschleißschutzhülse vermindert die Gefahr eines Verschleißes von Schaufelfuß und Deckband an ihren aneinander angrenzenden Flächen und damit die Gefahr einer Lockerung der Verbindung von Schaufelfuß und Deckband. Jedoch kann alternativ ebenfalls vorgesehen sein, keine Verschleißschutzhülse einzusetzen, so dass der Deckbandring an den radialen und/oder inneren Anlageflächen in direktem Kontakt mit dem Schaufelfuß steht.

Eine weitere Ausgestaltung der Erfindung sieht vor, dass der Deckbandring in seinem den Schaufeln zugewandten Abschnitt von den Schaufelfußfingern umfasst wird und einen der Ausnehmung im Schaufelfuß ähnlichen Querschnittsumriss besitzt.

Der Querschnitt des Deckbandringes kann in einer Ausgestaltung der Erfindung eine in Umfangsrichtung durchgehende Ausnehmung aufweisen. Es kann vorgesehen sein, dass eine solche Ausnehmung im Deckbandring von der dem Hauptströmungspfad zugewandten Seite oder von der dem Hauptströmungspfad abgewandten Seite eingebracht ist. Die Ausnehmung kann Strukturen des Deckbandes definieren, die in der Ausnehmung des Schaufelfußes angeordnet sind.

Eine Ausgestaltung der Erfindung sieht vor, dass die zwei V-förmig angeordneten Stege an ihren in die Ausnehmung des Schaufelfußes ragenden Enden durch eine dem Schaufelfuß zugewandte Basis miteinander verbunden sind, wobei zwischen den Stegen und der Basis ein materialfreier Innenraum verbleibt. Insgesamt entsteht dabei eine im Schnitt dreieckförmige Anordnung. Dabei kann vorgesehen sein, dass die Anordnung der zwei Stege und der Basis in der Schnittdarstellung näherungsweise entsprechend dem griechischen Buchstaben Omega ausgebildet ist. Durch Bereitstellen eines materialfreien Innenraums wird trotz der Verbindung der beiden Stege durch eine Basis eine Elastizität der Gesamtanordnung bereitgestellt, die es erlaubt, eventuell vorhandene Fertigungstoleranzen bzw. ein durch diese verursachten Spiel auszugleichen.

Gemäß einer Ausführungsvariante der Erfindung bildet das Deckband bzw. der Deckbandring in Richtung der Schaufeln im Querschnitt der Meridianebene einen dreieckförmigen Vorsprung, der in der Ausnehmung angeordnet ist. Zwei Schenkel des dreieckförmigen Vorsprungs, die durch die zwei V-förmig angeordneten Stege gebildet sind, liegen dabei an entsprechenden inneren schrägen Anlageflächen der Schaufelfußfinger an. Dabei kann vorgesehen sein, dass der dreieckförmige Vorsprung zumindest näherungsweise die Form des griechischen Buchstabens Ω besitzt und sich dementsprechend die beiden Schenkel des dreieckförmigen Vorsprungs an der dem Hauptströmungspfad abgewandten Seite nicht berühren, vielmehr der dreieckförmige Vorsprung an der dem Hauptströmungspfad abgewandten Seite eine Ausnehmung aufweist.

Die vorliegende Erfindung bezieht sich allgemein auf Schaufelreihen für Strömungsmaschinen wie Turbinen, und im besonderen Strömungsarbeitsmaschinen wie Bläser, Verdichter, Pumpen und Ventilatoren in axialer oder halbaxialer Bauart. Das Arbeitsmedium oder Fluid kann gasförmig oder flüssig sein. Die Strömungsmaschine kann eine oder mehrere Stufen mit jeweils einem Rotor und einem Stator umfassen. In Einzelfällen wird die Stufe lediglich durch einen Rotor gebildet.

Der Rotor einer Strömungsmaschine, in der eine erfindungsgemäße Deckbandanordnung eingesetzt wird, besteht aus einer Anzahl von Schaufeln, die mit der rotierenden Welle der Strömungsmaschine verbunden sind. Der Stator einer Strömungsmaschine, in der eine erfindungsgemäße Deckbandanordnung eingesetzt wird, besteht aus einer Anzahl feststehender Schaufeln. Die Rotortrommel und die Beschaufelung sind üblicherweise von einem Gehäuse umgeben.

Eine Strömungsmaschine, in der eine erfindungsgemäße Deckbandanordnung eingesetzt wird, kann auch einen Stator vor dem ersten Rotor, ein sogenanntes Vorleitrad, aufweisen. Mindestens ein Stator oder Vorleitrad kann - abweichend von einer unbeweglichen Fixierung - drehbar gelagert sein, um den Anstellwinkel verändern zu können. Eine Verstellung erfolgt beispielsweise durch eine von außerhalb des Ringkanals zugängliche Spindel.

In einer Ausgestaltung kann eine Strömungsmaschine, in der eine erfindungsgemäße Deckbandanordnung eingesetzt wird, mindestens eine Reihe verstellbarer Rotoren aufweisen.

In einer Ausgestaltung kann eine Strömungsmaschine, in der eine erfindungsgemäße Deckbandanordnung eingesetzt wird, bei Mehrstufigkeit zwei gegenläufige Wellen besitzen, so daß die Rotorschaufelreihen von Stufe zu Stufe die Drehrichtung wechseln. Hierbei existieren keine Statoren zwischen aufeinander folgenden Rotoren.

In einer Ausgestaltung kann eine Strömungsmaschine, in der eine erfindungsgemäße Deckbandanordnung eingesetzt wird, eine Nebenstromkonfiguration derart aufweisen, daß sich ein einstromiger Ringkanal hinter einer bestimmten Schaufelreihe in zwei konzentrische Ringkanäle aufteilt, die ihrerseits mindestens jeweils eine weitere Schaufelreihe beherbergen.

Die Erfindung betrifft des Weiteren eine Schaufelreihe einer Strömungsmaschine mit einer erfindungsgemäßen Deckbandanordnung.

Die Erfindung wird nachfolgend unter Bezugnahme auf die Figuren der Zeichnung anhand mehrerer Ausführungsbeispiele näher erläutert. Es zeigen:
- Fig. 1A: schematisch einen Rotor mit einem Deckband;
- Fig. 1B: schematisch einen Stator mit einem Deckband;
- Fig. 2A: ein Beispiel einer Deckbandanordnung gemäß dem Stand der Technik;
- Fig. 2B: eine vergrößerte Darstellung des Bereichs X des Beispiels der Fig. 2A;
- Fig. 3: ein erstes Ausführungsbeispiel eines Schaufelfußes einer Deckbandanordnung;
- Fig. 4: ein erstes Ausführungsbeispiel einer Deckbandanordnung unter Verwendung des Schaufelfußes der Fig. 3 und eines ersten Ausführungsbeispiels eines Deckbandes;
- Fig.5: ein zweites Ausführungsbeispiel einer Deckbandanordnung unter Verwendung des Schaufelfußes der Fig. 3 und eines zweiten Ausführungsbeispiels eines Deckbandes;
- Fig. 6: ein drittes Ausführungsbeispiel einer Deckbandanordnung unter Verwendung des Schaufelfußes der Fig. 3 und eines dritten Ausführungsbeispiels eines Deckbandes;
- Fig. 7a-c: Deckbandanordnungen gemäß den Figuren 4 bis 6, die jedoch jeweils ohne eine Verschleißschutzhülse ausgebildet sind;
- Fig. 8: ein weiteres Ausführungsbeispiel einer Deckbandanordnung; und
- Fig. 9: ein Ausführungsbeispiel einer Deckbandanordnung, bei der ein Deckbandring und ein Einlaufbelag des Deckbandes einteilig ausgebildet sind.

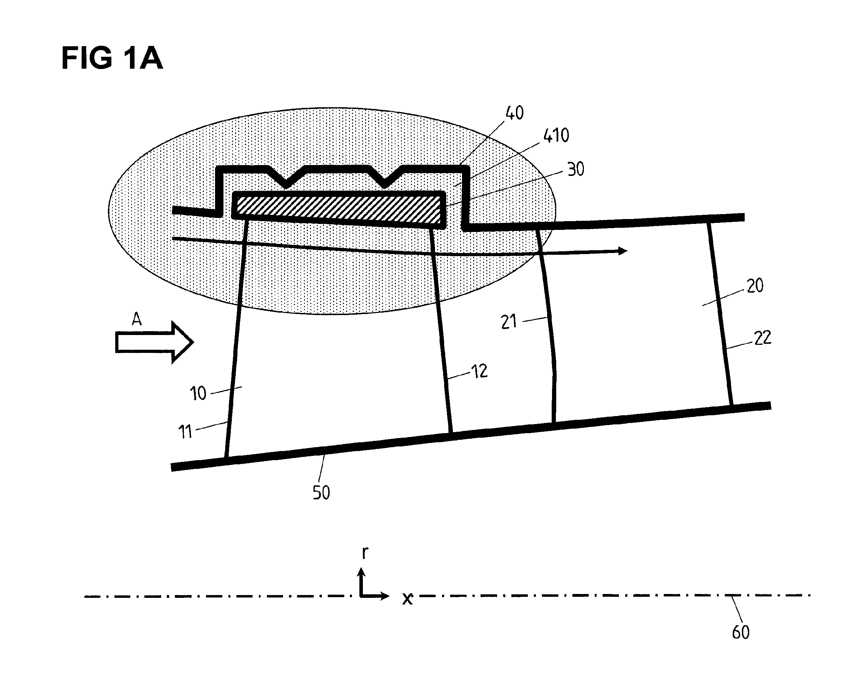

Die Figur 1A zeigt schematisch in der Meridianansicht, wobei x die Axialrichtung und r die Radialrichtung angibt, einen Abschnitt einer Strömungsmaschine, die eine Rotorschaufelreihe mit einer Mehrzahl von Rotorschaufeln 10 und eine Statorschaufelreihe mit einer Mehrzahl von Statorschaufeln 20 umfasst. Jede Rotorschaufel 10 weist eine Vorderkante 11 und eine Hinterkante 12 und jede Statorschaufel 20 eine Vorderkante 21 und eine Hinterkante 22 auf. Bei der Strömungsmaschine kann es sich um eine arbeitszuführende oder um eine arbeitsabgebende Strömungsmaschine handeln. Beispielsweise ist die Rotorschaufelreihe und die Statorschaufelreihe in einem Verdichter oder in einer Turbine eines Strahltriebwerks angeordnet.

Die Strömungsmaschine bildet einen Hauptströmungspfad aus, in dem ein Fluid in der Strömungsrichtung A strömt. Der Hauptströmungspfad wird radial innen durch eine Nabe oder Rotortrommel 50 und radial außen durch ein Gehäuse 40 begrenzt. Die Nabe/Rotortrommel 50 ist dabei rotierend ausgebildet, während das Gehäuse 40 stehend, d.h. nicht rotierend ausgebildet ist.

Am äußeren Schaufelende der Rotorschaufeln 10 ist eine schematisch dargestellte Deckbandanordnung 30 ausgebildet. Diese ist in einer Kavität 410, die im Gehäuse 40 ausgebildet ist, zur Schaffung einer möglichst glatten äußeren Hauptströmungspfadbegrenzung aufgenommen.

Ebenfalls dargestellt in der Figur 1A ist die Maschinenachse 60.

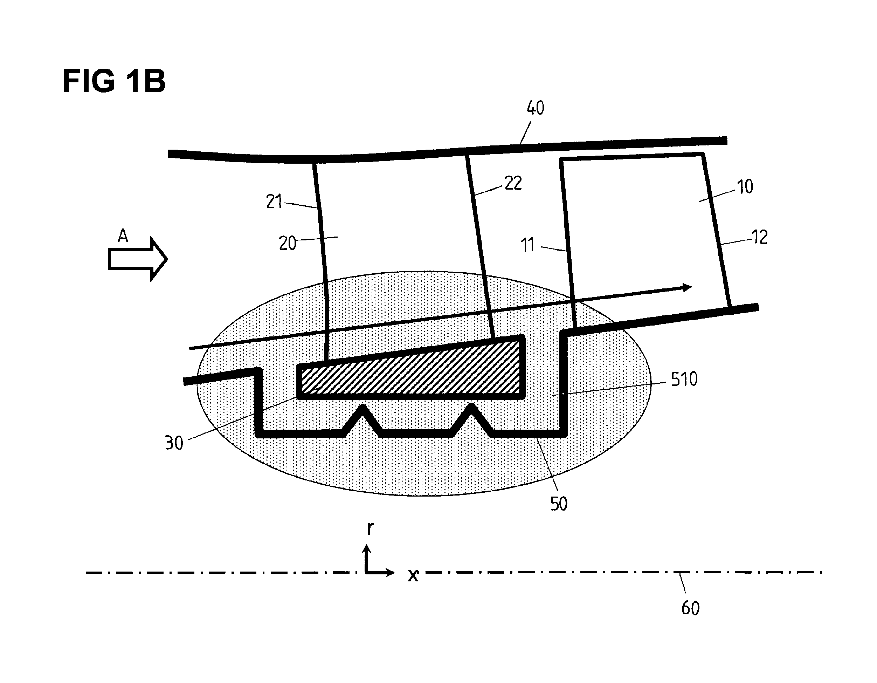

Figur 1B zeigt schematisch einen Abschnitt einer Strömungsmaschine, die entsprechend der Strömungsmaschine der Figur 1A ausgebildet ist, wobei bei der Figur 1B eine Deckbandanordnung 30 jedoch nicht am Rotor, sondern am Stator ausgebildet ist. Dementsprechend ist die Deckbandanordnung 30 am radial inneren Schaufelende der Statorschaufeln 20 angeordnet. Die Deckbandanordnung 30 ist dabei in einer Kavität 510 angeordnet, die die rotierende Nabe/Rotortrommel 50 bildet.

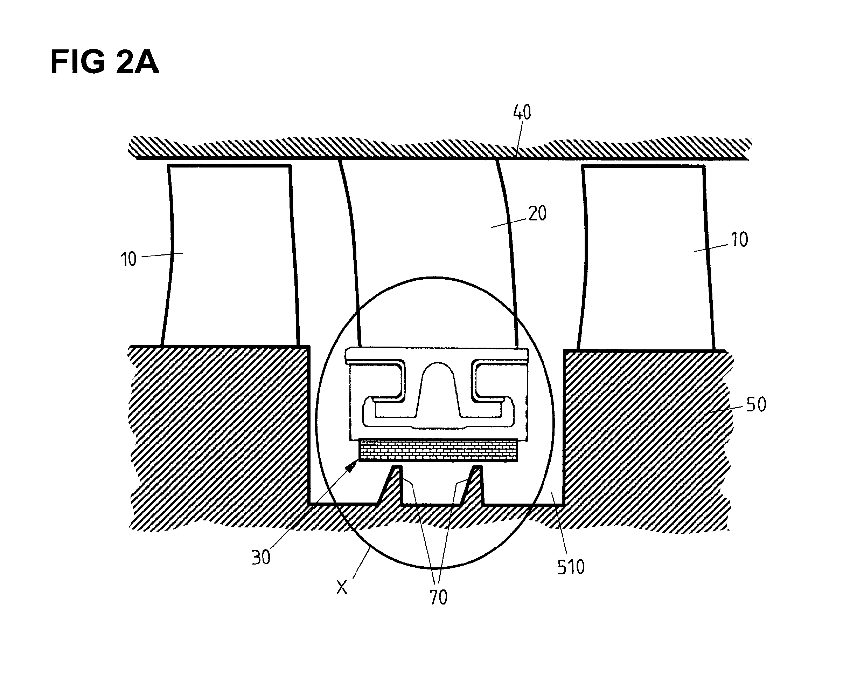

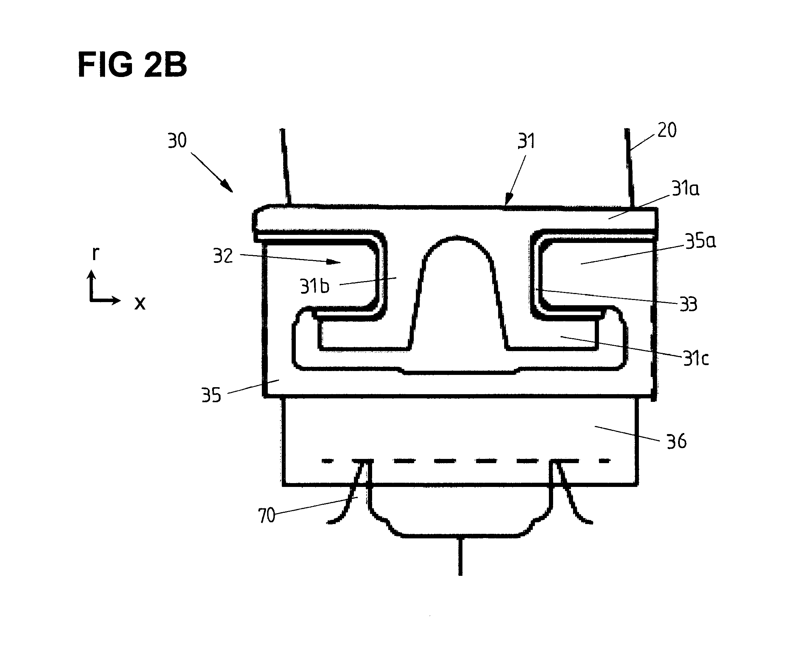

Zum besseren Verständnis der vorliegenden Erfindung wird im Folgenden anhand der Figuren 2A und 2B zunächst eine Deckbandanordnung gemäß dem Stand der Technik beschrieben, wie sie beispielsweise im Triebwerk TRENT 1000 des Unternehmens Rolls-Royce eingesetzt wird. Die Figur 2A zeigt einen entsprechenden Abschnitt einer Strömungsmaschine, wobei eine Statorschaufelreihe mit Statorschaufeln 20 zwischen zwei Rotorschaufelreihen mit Rotorschaufeln 10 angeordnet ist. Weiter sind ein feststehendes Gehäuse 40 und eine rotierende Nabe 50 vorgesehen, wie in Bezug auf die Fig. 1A erläutert. An der Statorschaufelreihe ist radial innen innerhalb einer Kavität 510 in der Nabe 50 eine Deckbandanordnung 30 ausgebildet, an die Dichtspitzen 70 der Nabe 50 ragen. Der Bereich X der Figur 2A ist in der Figur 2B vergrößert dargestellt.

Die Figur 2B zeigt die Deckbandanordnung 30 in der durch die Axialrichtung x und die Radialrichtung r aufgespannten Meridianebene der Strömungsmaschine. Die Darstellung ist insofern verallgemeinert, als die gezeigte Anordnung sowohl für eine Rotorschaufel mit radial außen liegender Deckbandanordnung und vom Gehäuse ausgehende Dichtspitzen als auch für eine Statorschaufel mit radial innen liegender Deckbandanordnung und von der Nabe oder Rotortrommel ausgehenden Dichtspitzen steht.

Die Deckbandanordnung weist als Hauptkomponenten einen Schaufelfuß 31 und einen Deckbandring 35 auf, wobei der Deckbandring 35 formschlüssig am Schaufelfuß 31 befestigt ist. Der Schaufelfuß 31 umfasst eine Schaufelfußplattform 31a, zwei davon im Wesentlichen senkrecht abstehende Schaufelfußstege 31b und von letzteren in axialer Richtung nach vorne bzw. nach hinten abstehende Schaufelfußfinger 31c auf. Dabei werden zwischen den Schaufelfußfingern 31c und der Schaufelfußplattform 31a zwei äußere Umfangsnuten 32 gebildet, in die zwei in axialer Richtung aufeinander zu weisende Finger 35a des Deckbandrings 35 eingreifen. Weiter kann vorgesehen sein, dass wie dargestellt zwischen den einander zugewandten Oberflächen von Schaufelfuß 31 und Deckbandring 35 eine Verschleißschutzhülse 33 vorgesehen ist.

Der Schaufelfuß 31 und die Statorschaufel 20 können einteilig ausgebildet sein.

Der Deckbandring 35 weist an seiner dem Hauptströmungspfad abgewandten Seite einen Einlaufbelag 36 auf, der den Dichtspitzen 70 zugewandt ist. Die Dichtspitzen 70 bilden dabei einen Teil der Nabe oder Rotortrommel und rotieren dementsprechend relativ zu der statischen Deckbandanordnung 30. Dabei laufen die Dichtspitzen 70 in den Einlaufbelag 36 ein, um eine Leckage zwischen Nabe und Statorschaufeln zu minimieren. Sofern die Deckbandanordnung an den Schaufeln eines Rotors ausgebildet ist, rotiert die Deckbandanordnung relativ zu einem nicht-rotierenden Gehäuse mit nicht-rotierenden Dichtspitzen.

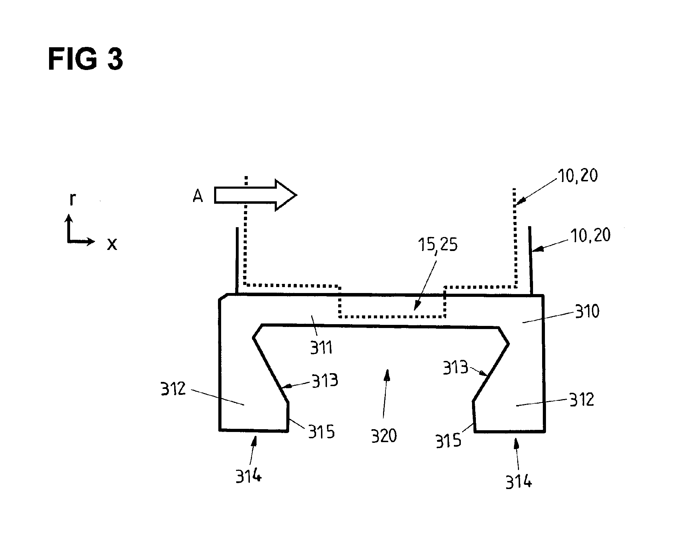

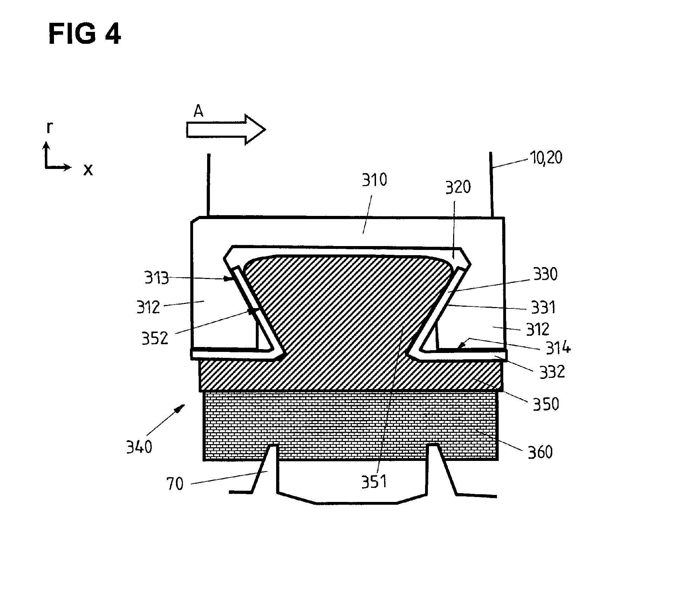

Die Figur 3 zeigt ein Ausführungsbeispiel einer erfindungsgemäßen Deckbandanordnung, wobei in der Figur 3 nur der Schaufelfuß der Deckbandanordnung dargestellt ist und noch nicht das Deckband. Die Verbindung des in der Figur 3 beschriebenen Schaufelfußes mit verschiedenen Deckbändern ist in den Figuren 4 bis 6 dargestellt.

Der Pfeil A kennzeichnet die Richtung der Strömung im Hauptströmungspfad. Wie in Bezug auf die Figuren 1A, 1B erläutert, befindet sich im Hauptströmungspfad unter anderem eine Rotorschaufelreihe oder eine Statorschaufelreihe mit Rotorschaufeln 10 oder 20, an deren Enden innenseitig oder außenseitig eine Deckbandanordnung angeordnet ist. In der Figur 3 ist das Schaufelprofil einer solchen Rotorschaufel oder Statorschaufel 10, 20 schematisch angedeutet. Es geht am inneren Ende (beim Stator) oder am äußeren Ende (beim Rotor) in einen Schaufelfuß 310 über, der dort mit der dem Schaufelprofil zugewandten Seite den Hauptströmungspfad A berandet.

Dabei sind in der Figur 3 zwei Ausführungsvarianten angedeutet. Mit durchgezogener Linie ist eine Ausführungsvariante angedeutet, bei der das Schaufelprofil 10, 20 fest mit einem Schaufelfuß 310 verbunden ist. Mit gepunkteter Linie ist eine Ausführungsvariante angedeutet, bei der das Schaufelprofil 10, 20 drehbar im Schaufelfuß 310 gelagert ist. Die drehbare Lagerung erfolgt über einen Teller 15, 25, der an den Schaufeln 10, 20 ausgebildet ist. Die Stator- oder Rotorschaufeln 10, 20 können somit verdrehbar oder unverdrehbar angeordnet sein.

Der Schaufelfuß 310 umfasst eine Schaufelfußplattform 311, die mit dem Ende der Schaufel 10, 20 verbunden ist und sich zumindest über einen Teil des Umfangs der Schaufelreihe erstreckt. Am axial vorderen und am axial hinteren Ende der Schaufelfußplattform 311 bildet der Schaufelfuß 310 zwei vom Hauptströmungspfad bzw. den Schaufeln 10, 20 weg weisende Schaufelfußfinger 312 aus (einen axial vorderen und einen axial hinteren Schaufelfußfinger). Diese bilden innenseitig einander zugewandte Flächen 313, 315 aus, wobei der Schaufelfuß 310 zwischen den beiden Schaufelfußfingern 312 eine Ausnehmung 320 im Schaufelfuß 310 bildet.

Die Schaufelfußfinger 312 bilden des Weiteren an ihrer dem Hauptströmungspfad abgewandten Stirnseite eine radiale Anlagefläche 314 aus.

Die inneren Anlagenflächen 313, 315 umfassen jeweils eine schräg verlaufende innere Anlagefläche 313, die gegenüber der Axialrichtung und der Radialrichtung schräg angeordnet und den Schaufeln 10, 20 zugewandt ist. Die Anlageflächen 315 verlaufen in radialer Richtung und stehen senkrecht von der vorderen radialen Anlagefläche 314 ab. Dementsprechend ist die Aussparung 320 im dargestellten Ausführungsbeispiel schwalbenschwanzartig ausgeführt, wobei die durch die Schaufelfußfinger 312 gebildete Ausnehmung 320 sich in radialer Richtung zu den Schaufeln 10, 20 bzw. zum Hauptströmungspfad hin im Hinblick auf ihre axiale Ausdehnung verbreitert.

Die beiden Schaufelfußfinger 312 sind dazu geeignet, ein in die Ausnehmung 320 des Schaufelfußes 310 eingesetztes Element eines Deckbandes oder einen Bereich eines Deckbandes zu umgreifen und am Schaufelfuß 310 zu halten.

Die Ausnehmung 320 zwischen den Schaufelfußfingern 312 besitzt eine symmetrische Form, wie auch der Schaufelfuß 310 selbst eine symmetrische Form besitzt. Die Anlageflächen 313, 315 können jeweils ebenflächig ausgebildet sein, alternativ jedoch auch eine Strukturierung, beispielsweise zur Bereitstellung von Rastelementen aufweisen.

Die Figur 4 zeigt ein Ausführungsbeispiel einer Deckbandanordnung, bei der in den Schaufelfuß 310 der Figur 3 ein Deckband 340 eingesetzt ist. Das Deckband 340 umfasst einen Deckbandring 350 sowie einen an der dem Hauptströmungspfad abgewandten Seite des Deckbandringes 350 angeordneten Einlaufbelag 360, der auf den Deckbandring 350 aufgebracht ist und aus einem vergleichsweise weichen Material besteht.

Der Deckbandring 350 bildet einen vorstehenden Bereich 351 aus, der in der Ausnehmung 320 des Schaufelfußes 310 aufgenommen und formschlüssig im Schaufelfuß 310 gehalten wird. Dabei bildet der Bereich 351 des Deckbandringes 350 Seitenflächen 352 aus, die parallel zu den schräg verlaufenden inneren Anlageflächen 313 der Schaufelfußfinger 312 verlaufen, so dass der Bereich 351 des Deckbandringes 350 und die Ausnehmung 320 des Schaufelfußes 310 eine zueinander korrespondierende Form besitzen.

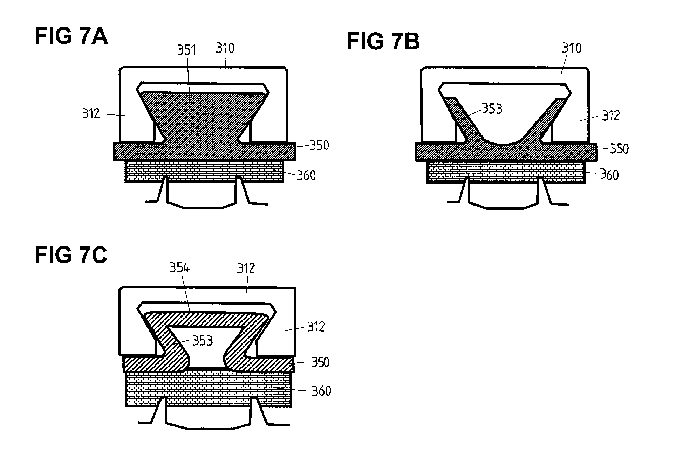

Des Weiteren ist vorgesehen, dass zwischen den einander zugewandten Anlageflächen 313, 352 von Schaufelfußfinger 312 und Deckbandring 350 im Bereich der Schaufelfußfinger 312 eine Verschleißschutzhülse 330 angeordnet ist. Die Verschleißschutzhülse 330 weist dabei zwei winklig zueinander ausgebildete Schenkel 331, 332 auf, die jeweils an den Flächen 313, 314 der Schaufelfußfinger 312 anliegen. Die Verschleißschutzhülse 330 dient dazu, im Kontaktbereich von Schaufelfußfinger 312 und Deckbandring 350 einen Verschleiß und damit eine Lockerung der Verbindung zwischen diesen Bauteilen zu vermeiden. Die Verwendung solcher Verschleißschutzhülsen 330 ist jedoch optional, wie im Hinblick auf die Figur 7 noch erläutert werden wird.

Der Deckbandring 350 verläuft entlang wenigstens eines Teils des Umfangs der Schaufelreihe. Es ist von Vorteil, wenn der Deckbandring 350 an seinen axial vorderen und hinteren Randbereichen wie dargestellt an den radialen Anlageflächen 314 der Schaufelfußfinger 312 anliegt. Die dem Hauptströmungspfad abgewandte Seite des Deckbandringes 350 ist im Wesentlichen eben und verläuft in Axialrichtung, wobei an dieser Seite der Einlaufbelag 360 angeordnet ist. Dabei ist die Verwendung eines solchen Einlaufbelages 360 zwar in vielen Ausführungsvarianten vorteilhaft, jedoch nicht zwingend erforderlich.

Die Deckbandanordnung gemäß den Figuren 3 und 4, ebenso wie die weiteren beschriebenen Deckbandanordnungen, sind mit dem Vorteil verbunden, dass eine sichere Verbindung zwischen Schaufelfuß 310 und Deckband 340 auch bei kleinen axialen Ausmaßen der Schaufel 10, 20 und damit des Schaufelfußes 310 realisiert werden kann, insbesondere wenn der axiale Abstand zwischen dem vorderen und dem hinteren Schaufelfußfinger 312 vergleichsweise gering ist.

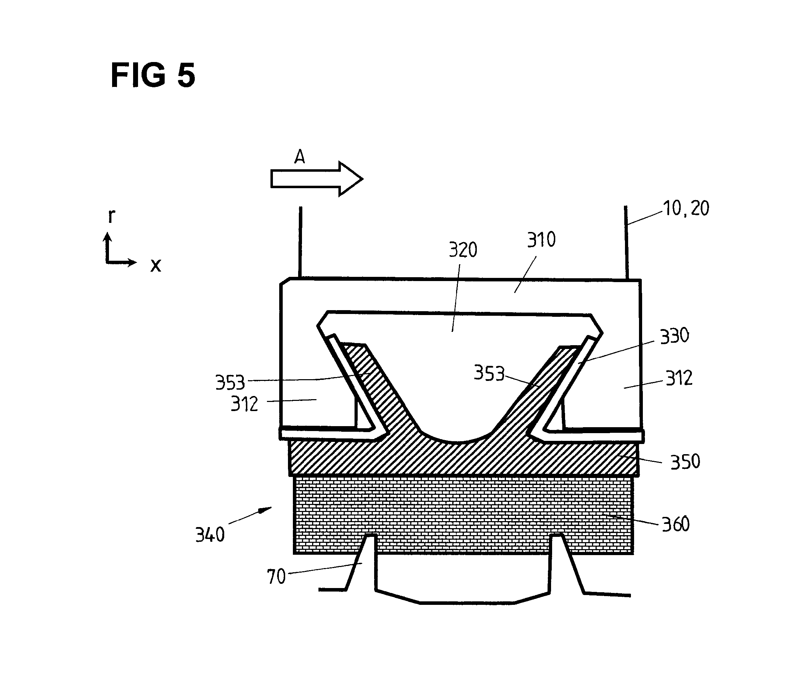

Die Figur 5 zeigt ein weiteres Ausführungsbeispiel einer Deckbandanordnung in der Meridianansicht (x-r). Die Deckbandanordnung umfasst ebenso wie bei der Figur 4 einen Schaufelfuß 310 und ein Deckband 340, wobei letzteres einen Deckbandring 350 und einen Einlaufbelag 360 umfasst. Abweichend vom Ausführungsbeispiel der Figur 4 ist die Querschnittsform des Deckbandringes 350 im Ausführungsbeispiel der Figur 5 derart gewählt, dass er nur im Bereich des Kontaktes mit den Schaufelfußfingern 312 Material aufweist. Dementsprechend umfasst der Deckbandring 350 nicht einen geschlossenen Bereich wie beim Ausführungsbeispiel der Figur 4, der die Ausnehmung 320 ausfüllt, sondern lediglich zwei Stege 353, die parallel zu den inneren Anlageflächen 313 der Schaufelfußfinger 312 bzw. den entsprechenden Abschnitten einer Verschleißschutzhülse 330 verlaufen und dementsprechend V-förmig angeordnet sind.

Dieses Ausführungsbeispiel ist mit dem Vorteil einer Material- und Gewichtsreduzierung des Deckbandes 350 verbunden.

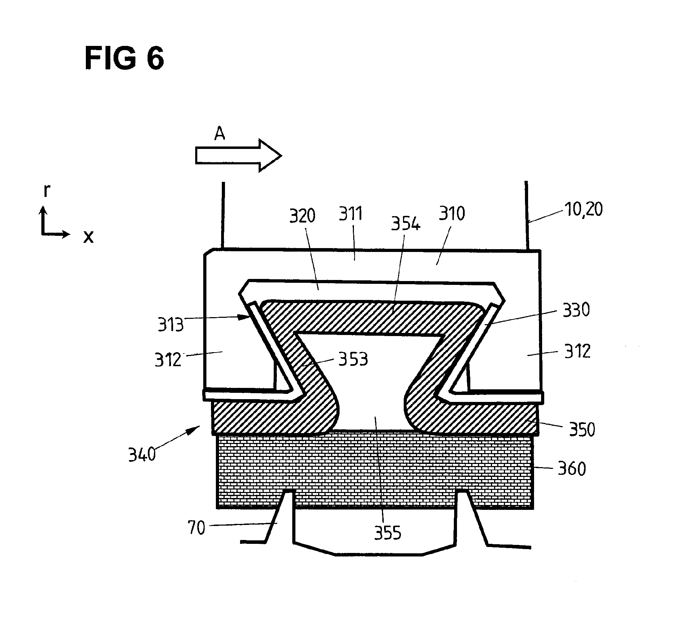

Die Figur 6 zeigt in der Meridianansicht (x-r) ein Ausführungsbeispiel einer Deckbandanordnung, die ebenfalls einen Schaufelfuß 310, ein Deckband 340 mit einem Deckbandring 350 und einen Einlaufbelag 360 sowie eine Verschleißschutzhülse 330 umfasst. Zwischen den Schaufelfußfingern 312 ist wie bei den Ausführungsbeispielen der Figuren 3 bis 5 eine Ausnehmung 320 ausgebildet.

Die Querschnittsform des in der Ausnehmung 320 angeordneten Bereichs des Deckbandringes 350 ist im Ausführungsbeispiel der Figur 6 derart gestaltet, dass der Deckbandring 350 im Bereich der Ausnehmung 320 dreieckförmig mit zwei V-förmigen Schenkeln bzw. Stegen 353, die entsprechend den inneren Anlageflächen 313 der Schaufelfußfinger 312 ausgerichtet sind, und mit einer die Enden der beiden Schenkel bzw. Stege 353 verbindenden, der Schaufelfußplattform 311 zugewandten Basis 354 ausgebildet ist, wobei zwischen den Schenkeln bzw. Stegen 353 und der Basis 354 ein materialfreier Innenraum 355 verbleibt. Auch kann vorgesehen sein, dass die beiden Schenkel bzw. Stege 353 an ihrer dem Schaufelfuß 310 abgewandten Seite sich nicht berühren und dort somit eine Öffnung zu dem materialfreien Innenraum 355 bilden. Die Ausbildung des Deckbandrings 350 im Bereich der Ausnehmung 320 ähnelt dabei in der Schnittdarstellung dem griechischen Buchstaben Ω.

In alternativen, nicht dargestellten Ausführungsbeispielen der Figuren 5 und 6 können in anderer Weise Aussparungen im Material des Deckbandrings 350 ausgebildet sein, die dem Hauptströmungspfad abgewandt oder dem Hauptströmungspfad zugewandt sein können.

Die Figuren 7A bis 7C zeigen drei Ausführungsbeispiele von Deckbandanordnungen, die den Ausführungsbeispielen der Figuren 4, 5 und 6 entsprechen, ohne dass jedoch jeweils Verschleißschutzhülsen vorgesehen sind. Bei diesen abgewandelten Ausführungsbeispielen steht daher der Deckbandring 350 in direktem Kontakt mit den entsprechenden Kontaktflächen 313, 314 der Schaufelfußfinger 312 des Schaufelfußes 310.

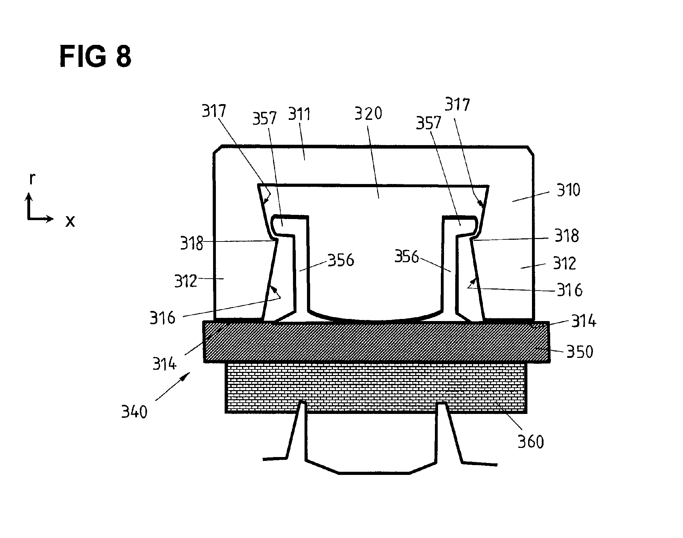

Die Figur 8 zeigt ein weiteres Ausführungsbeispiel einer Deckbandanordnung in der Meridianansicht (x-r). Die Deckbandanordnung umfasst einen Schaufelfuß 310 und ein Deckband 340. Der Schaufelfuß 310 weist eine Schaufelfußbasis 311 und zwei von der Schaufelfußbasis 311 sich radial vom Hauptströmungspfad weg erstreckende Schaufelfußfinger 312 auf, die zwischen sich eine Ausnehmung 320 ausbilden.

Die Schaufelfußfinger 312 bilden einen axial vorderen Schaufelfußfinger und einen axial hinteren Schaufelfußfinger und innere Flächen 316, 317 aus, die sich allerdings von den inneren Flächen der Ausführungsbeispiele der Figuren 3 bis 7 unterscheiden. Wiederum vorgesehen ist jeweils eine radiale Anlagefläche 314 der beiden Schaufelfußfinger 312.

So umfassen die Anlageflächen an den Innenseiten der Schaufelfußfinger 312 jeweils eine schräg verlaufende Gleitfläche 316, die sich an die radiale Anlagefläche 314 anschließt, und eine schräg verlaufende innere Anlagefläche 317, die angrenzend an die Schaufelfußplattform 311 ausgebildet ist. Im Bereich der Gleitflächen 316 verringert sich die axiale Ausdehnung der Aussparung 320 in radialer Richtung zu den Schaufeln hin, und im Bereich der Anlageflächen 317 verbreitert sich die axiale Ausdehnung der Aussparung 320 in radialer Richtung zu den Schaufeln hin. Die Schaufeln selbst sind im Ausführungsbeispiel der Figur 8 nicht gesondert dargestellt, jedoch ebenso wie in dem Ausführungsbeispiel der Figuren 3 bis 7 mit dem Schaufelfuß 310 verbunden.

Im Übergang zwischen der Gleitfläche 316 und der inneren Anlagefläche 317 ist ein Rastvorsprung 318 ausgebildet.

Das Deckband 340 umfasst einen Deckbandring 350 und einen an diesem befestigten Einlaufbelag 360. Zur Verbindung des Deckbandrings 350 mit dem Schaufelfuß 310 bildet der Deckbandring 350 zwei Stege 356 aus, die sich im Wesentlichen radial in Richtung der Schaufeln bzw. des Hauptströmungspfads erstrecken und die an ihrem Ende jeweils eine abstehende und der jeweils benachbarten Anlagefläche 317 zugewandte Rastnase 357 ausbilden. Die Rastnase 357 verrastet dabei mit dem Rastvorsprung 318 des Schaufelfußes 310, wenn die Stege 356 in die Aussparung 320 eingeführt werden.

Die Stege 356 bilden einen einstückigen Bestandteil des Deckbandrings 350. Dabei kann vorgesehen sein, dass der Deckbandring 350 im Bereich der Stege 356 am Umfang mehrfach unterbrochen ist, so dass die Stege 356 strukturell elastisch wirken können und auf Druck entsprechend nachgeben. Dabei kann vorgesehen sein, dass die Anzahl der Unterbrechungen der beiden Stege 356 am Umfang mit der Anzahl der Schaufeln oder Schaufelfüße übereinstimmt oder ein Vielfaches davon bildet.

Durch eine elastische Ausbildung der Stege 356 ist es möglich, zu einer Verbindung des Deckbandrings 350 mit dem Schaufelfuß 310 die Stege 356 in radialer Richtung in die Ausnehmung 320 des Schaufelfuß 310 einzuführen, wobei die Stege 356 zunächst elastisch aufeinander zu verbogen werden und nach Passieren des Rastvorsprungs 318 zurückfedern, so dass sie an der schrägen Anlagefläche 317 anliegen und dabei über die Rastnasen 357 an den Rastvorsprüngen 318 verrastet sind. Hierdurch wird eine feste Verbindung zwischen Schaufelfuß 310 und Deckbandring 350 bereitgestellt.

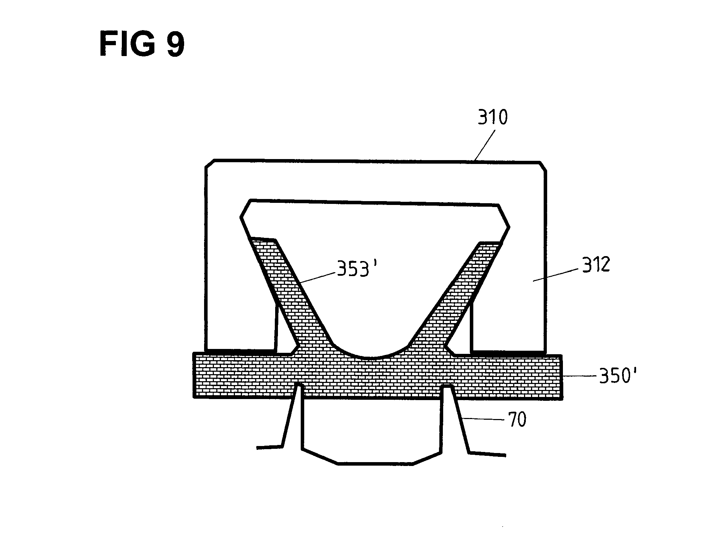

Die Figur 9 zeigt ein Ausführungsbeispiel, das bis auf den Umstand dem Ausführungsbeispiel der Figur 5 entspricht, dass der Deckbandring 350' zusätzlich die Funktion des Einlaufbelages übernimmt, so dass Deckbandring und Einlaufbelag zu einem einzigen integralen Bauteil 350' zusammengefasst sind. Dabei kann vorgesehen sein, dass der integrale Einlaufdeckbandring 350 mit Hilfe eines Spritzguss- oder Sinterverfahrens hergestellt ist. Zusätzlich ist beim Ausführungsbeispiel der Figur 9 vom Einsatz einer Verschleißschutzhülse abgesehen worden. Eine solche kann jedoch alternativ vorgesehen sein.

Die Erfindung beschränkt sich in ihrer Ausgestaltung nicht auf die vorstehend dargestellten Ausführungsbeispiele, die lediglich beispielhaft zu verstehen sind. So kann der Schaufelfuß zum Beispiel auch in anderer Weise als vorliegend beschrieben eine Ausnehmung ausbilden, in die ein Bereich oder ein Bestandteil oder ein Element eines Deckbandes zur Verbindung von Schaufelfuß und Deckband eingeführt und gehalten ist.

## Patentansprüche

1. Deckbandanordnung für eine Strömungsmaschine, die aufweist:
- mindestens einen Schaufelfuß (310), der dazu ausgebildet ist, mit mindestens einem Schaufelende einer Reihe von Schaufeln (10, 20) eines Rotors oder eines Stators einer Strömungsmaschine verbunden zu werden, oder der mit mindestens einem solchen Schaufelende verbunden ist, und
- ein Deckband (340, 350, 360), dass an der den Schaufeln (10, 20) abgewandten Seite des Schaufelfußes (310) mit diesem verbunden ist, wobei
- der Schaufelfuß (310) an der den Schaufeln (10, 20) abgewandten Seite zwei sich im Wesentlichen in radialer Richtung erstreckende und zueinander axial beabstandete Schaufelfußfinger (312) aufweist, die zwischen sich eine in Umfangsrichtung durchgehende Ausnehmung (320) ausbilden, und mindestens ein Element oder Bereich (353, 354) des Deckbandes (340, 350) zur Befestigung am Schaufelfuß (310) in der Ausnehmung (320) angeordnet ist,
**dadurch gekennzeichnet,**
**dass** das Deckband (350) zwei Stege (353) aufweist, die sich in die Ausnehmung (320) erstrecken und die von den Schaufelfußfingern (312) umfasst werden, wobei die zwei Stege (353) im Wesentlichen eine V-förmige Anordnung bilden.

2. Deckbandanordnung nach Anspruch 1, **dadurch gekennzeichnet, dass** die durch die Schaufelfußfinger (312) gebildete Ausnehmung (320) eine konkave Form aufweist und die zwei Stege (353) formschlüssig in der Ausnehmung (320) angeordnet sind.

3. Deckbandanordnung nach Anspruch 1 oder 2, **dadurch gekennzeichnet, dass** die Ausnehmung (320) zumindest in einem Teilbereich schwalbenschwanzförmig ausgebildet ist und sich dabei in Richtung der Schaufeln (10, 20) verbreitert.

4. Deckbandanordnung nach einem der vorangehenden Ansprüche, **dadurch gekennzeichnet, dass** jeder Schaufelfußfinger (312) mindestens eine innere Anlagefläche (313) ausbildet, die der inneren Anlagefläche (313) des jeweils anderen Schaufelfußfingers (312) zumindest teilweise zugewandt ist.

5. Deckbandanordnung nach einem der vorangehenden Ansprüche, **dadurch gekennzeichnet, dass** die V-förmig angeordneten Stege (353) jeweils parallel zu einer inneren Anlagefläche (313) einer der Schaufelfußfinger (312) verlaufen.

6. Deckbandanordnung nach Anspruch einem der vorangehenden Ansprüche, **dadurch gekennzeichnet, dass** der Deckbandring (350) in Umfangsrichtung im Bereich der Stege (353) mehrmals unterbrochen ist, derart, dass die Stege (353) elastisch ausgebildet sind.

7. Deckbandanordnung nach Anspruch 6, **dadurch gekennzeichnet, dass** die Anzahl der Unterbrechungen der beiden Stege (353) am Umfang mit der Anzahl der Schaufeln (10, 20) übereinstimmt oder ein Vielfaches davon bildet.

8. Deckbandanordnung nach einem der vorangehenden Ansprüche, **dadurch gekennzeichnet, dass** das Deckband (340) einen Deckbandring (350) aufweist, der die zwei Stege (353) aufweist, die in der Ausnehmung (320) des Schaufelfußes (310) angeordnet sind und der sich entlang wenigestens eines Teils des Umfangs der Schaufelreihe erstreckt.

9. Deckbandanordnung nach Anspruch 8, **dadurch gekennzeichnet, dass** an der dem Schaufelfuß (310) abgewandten Seite des Deckbandringes (350) ein Einlaufbelag (360) am Deckbandring (350) angeordnet ist.

10. Deckbandanordnung nach einem der vorangehenden Ansprüche, **dadurch gekennzeichnet, dass** die Ausnehmung (320) zwischen den Schaufelfußfingern (312) eine symmetrische Form besitzt.

11. Deckbandanordnung nach einem der vorangehenden Ansprüche, **dadurch gekennzeichnet, dass** des Weiteren wenigstens eine Verschleißschutzhülse (330) vorgesehen ist, die zwischen aneinander angrenzenden Flächen (313, 352) des Schaufelfußes (310) und des Deckbandringes (350) angeordnet ist.

12. Deckbandanordnung nach einem der vorangehenden Ansprüche, **dadurch gekennzeichnet, dass** die zwei V-förmig angeordneten Stege (353) durch eine dem Schaufelfuß (310) zugewandte Basis (354) verbunden sind, wobei zwischen den Stegen (353) und der Basis (353) ein materialfreier Innenraum (355) verbleibt.

13. Deckbandanordnung nach Anspruch 12, **dadurch gekennzeichnet, dass** die Anordnung der zwei Stege (353) und der Basis (354) in der Schnittdarstellung näherungsweise entsprechend dem griechischen Buchstaben Omega ausgebildet ist.

14. Deckbandanordnung nach einem der vorangehenden Ansprüche, **dadurch gekennzeichnet, dass** das Deckband (340, 350) in Richtung der Schaufeln (10, 20) einen im Querschnitt der Meridianebene dreieckförmigen Vorsprung (353, 354) bildet, der in der Ausnehmung (320) angeordnet ist, wobei die beiden Stege (353) V-förmige Schenkel des dreieckförmigen Vorsprungs (353, 354) bilden.

15. Schaufelreihe einer Strömungsmaschine mit einer Deckbandanordnung gemäß Anspruch 1.
